# EUROPÄISCHE PATENTSCHRIFT

(11) **EP 3 595 950 B1**
(45) Veröffentlichungstag und Bekanntmachung des Hinweises auf die Patenterteilung: **31.03.2021**
(21) Anmeldenummer: 18703247.9
(22) Anmeldetag: 25.01.2018
(51) Int. Cl.: B60T 13/74, F16H 1/06, F16H 1/16, F16H 57/02, F16H 57/021, F16H 57/028

(54) **AKTOR MIT EINER ANTRIEBSEINHEIT UND EINER GETRIEBEEINHEIT**
ACTUATOR COMPRISING A DRIVE UNIT AND A TRANSMISSION UNIT
ACTIONNEUR COMPRENANT UNE UNITÉ D'ENTRAÎNEMENT ET UNE UNITÉ DE TRANSMISSION

(30) Priorität: 13.03.2017 DE 102017204119
(43) Veröffentlichungstag der Anmeldung: 22.01.2020
(73) Patentinhaber: Robert Bosch GmbH, 70442 Stuttgart (DE)
(72) Erfinder: WEISSINGER, Daniel, 70825 Korntal-Muenchingen (DE); BOLLWERK, Andre, 71711 Steinheim An Der Murr (DE); NAGEL,Willi, 71686 Remseck/Hochdorf (DE)
(86) Internationale Anmeldenummer: PCT/EP2018/051805
(87) Internationale Veröffentlichungsnummer: WO 2018/166685

(56) Entgegenhaltungen:
- DE-C1- 3 701 167
- DE-U1- 9 216 772
- US-A- 5 202 597
- US-A- 5 590 744

## Beschreibung

### Stand der Technik

Die Offenlegungsschrift DE 102012222949 A1 offenbart eine Getriebevorrichtung mit einer Schneckenwelle, welche durch einen Elektromotors in eine Drehbewegung versetzbar ist, sowie ein mit einem ersten Ritzel verbundenes erstes Schneckenrad und ein mit einem zweiten Ritzel verbundenes zweites Schneckenrad, welche die Schneckenwelle derart kontaktieren, dass das erste Schneckenrad und das erste Ritzel um eine gemeinsame erste Drehachse und das zweite Schneckenrad und das zweite Ritzel um eine gemeinsame zweite Drehachse drehbar sind. Ferner hat die Getriebevorrichtung einen verstellbaren Kolben, der mittels des um die erste Drehachse gedrehten ersten Ritzels und des um die zweite Drehachse gedrehten zweiten Ritzels entlang einer Verstellachse verstellbar ist. Außerdem betrifft die Erfindung einen elektromotorischen Bremskraftverstärker. Auch die US5205597A zeigt einen Aktor mit einer Antriebseinheit und einer Getriebeeinheit.

### Offenbarung der Erfindung

Der erfindungsgemäße Aktor umfasst die Merkmale des Anspruchs 1.

Ein Aktor kann beispielsweise ein elektromechanischer Bremskraftverstärker sein. Eine Antriebseinheit, beispielsweise ein Elektromotor treibt über eine Getriebeeinheit einen Kolben an, der eine Kraftübertragung in ein hydraulisches Bremssystem bewerkstelligt, beispielsweise über einen Hauptbremszylinder. Der elektrische Bremskraftverstärker als Aktor kann eigenständig Druck in einem hydraulischen Bremssystem erzeugen, oder gemeinsam mit einem Fahrer indem er diesen bei einer Bremsbetätigung unterstützt.
Dies ermöglicht eine Fixierung der Antriebseinheit in Richtung der Getriebeachse an der Getriebeeinheit, mit erhöhter Stabilität. Ein Ablösen oder Abheben der Antriebseinheit von der Getriebeinheit kann so verhindert werden, insbesondere in der Richtung der Getriebeachse. Durch das Verhindern eines Abhebens kann ein mechanisches Zusammenspiel von Antriebseinheit und Getriebeinheit in Form eines Antriebs eines Getriebes, was in bekannter Weise über Zahnräder erfolgt optmiert werden, da ein Abheben der Antriebseinheit von der Getriebeeinheit zu einer Veränderung einer Beabstandung der Zahnräder führen kann.

In Ausgestaltung des Aktors ist das Gegenelement Teil einer Getriebeachse der Getriebeeinheit. Die Fixierung in einem Gegenelement an einer Getriebeachse erhöht exakt in diesem Bereich die Stabilisierung der Anbindung der Antriebseinheit an die Getriebeeinheit. Eine Fixierung in der Getriebeachse selber ist besonders vorteilhaft, weil in diesem Bereich Bohrungen und Fixierungen über Schrauben oder Stecker - auch Bauraumbedingt häufig störend oder sogar gar nicht möglich sind.

Vorteilhaft ist ferner, dass Ausrichtungselement und das Gegenelement komplementär zueinander sind. Die ermöglicht ein leichtes in Eingriff bringen und Verbauen der Antriebseinheit und der Getriebeeinheit miteinander.

In vorteilhafter Art sind das Ausrichtungselement und das Gegenelement als Verbindungsbauteile derart komplementär, dass eines der beiden Verbindungsbauteile steckerartig und das jeweils andere der beiden Verbindungsbauteile buchsenartig vorgesehen ist. Dies ermöglicht eine Anpassung an die Erfordernisse, wo gerade bauraumbedingt eine Buchse oder ein Stecker leichter angebracht werden kann. Klar ist, dass jeweils das gegenteilige Verbindungselement an der anderen Einheit vorzuhalten ist.

In vorteilhafter Ausgestaltung ist das Fixierungselement jeweils an dem steckerartigen Verbindungsbauteil der beiden Verbindungsbauteile angebracht. Also jeweils an demjenigen Teil von Ausrichtungselement und Gegenelement, das als Stecker oder Pin vorliegt. Auf einem Stecker kann einfach ein Fixierungselement aufgebracht werden.

Das steckerartige Verbindungsbauteil weist dabei einen Zwischenbereich in Form einer Ringnut auf, wobei das Fixierungsmittel in die Ringnut aufgenommen ist. Die Ringnut verhindert in vorteilhafter Weise ein Abrutschen des Fixierungselements, beispielsweise eines Toleranzrings. Dies ist besonders vorteilhaft bei Montage und Demontage der Antriebseinheit an der Getriebeeinheit. Ferner ermöglicht die Ringnut ein genaues Positionieren des Toleranzrings an der vorgesehenen Stelle des steckerartigen Verbindungsbauteils in Form eines Pins. Ferner ist vorteilhaft, dass durch das Vorsehen von Nutschultern eine zu hohe Belastung des Fixierungselements beim Verbauen verhindert wird. Die Nut schützt quasi das Fixierungselment.

In weiterer Ausgestaltung des Aktors ist vorgesehen, dass die Ringnut seitliche Nutschultern aufweist, die unterschiedliche Ausdehnung ausgehend von einem Nutboden haben. Der Nutboden verbindet am Pin die Nutschultern in axialer Richtung des Pins. Man kann die Ausdehnung auch als Höhe der Nutschultern betrachten. Die unterschiedlich hohen Nutschultern ermöglichen eine gewisse Beweglichkeit in Form eines Verkippens des Pins der umgebenden Mulde / Loch / Bohrung, was einem Brechen des Pins selber oder einer Überlastung des Pins an seiner Befestigung entgegenwirkt, insbesondere einer Überlastung des Pins im Fußbereich.

In vorteilhafter Ausgestaltung ist die höhere Nutschulter an derjenigen Seite des Nutbodens vorgesehen, an der das steckerartige Verbindungsbauteil an der Getriebeeinheit oder an der Antriebseinheit angebunden ist. Dies hängt davon ab, an welcher der zwei zu verbindenden Einheiten der Pin als steckerartiges Verbindungsbauteil vorgesehen oder ausgebildet ist. Durch die richtige Anordnung von höherer und niedrigerer Schulter ist die zulässige Verkippung in geeigneter Richtung zulässig. So kann eine Überlastung des Pins oder der Pinanbindung verhindert werden.

Vorteilhafterweise ist das Fixierungsmittel des Aktors ein Federelement, insbesondere ein Toleranzring. Die federnde Eigenschaft kann als Nachgiebigkeit beim Verbauen von Ausrichtungselement und Gegenelement verstanden werden. Die Nachgiebigkeit führt dazu, dass unter Krafteinwirkung das Fixierungselement nachgeben kann, wenn es zwischen Gegenelement und Ausrichtungselement eingebracht ist. Dies erhöht auch die Haltekraft der verbauten Teile zueinander.

In vorteilhafter Weise ist bei einer axialen Fixierung mittels des Fixierungsmittels die Fixierung wieder lösbar. Dies ermöglicht eine einfache Demontage der Bauteile Antriebseinheit und Getriebeeinheit, beispielsweise um eine Antriebseinheit zu tauschen. Die Demontage kann dabei zerstörungsfrei erfolgen.

In vorteilhafter Weise lässt sich die axiale Fixierungsstärke der axialen Fixierung anhand einer Auslegung des Fixierungsmittels einstellen. So ist in einfacher Weise die Fixierungsstärke an die vorliegende Bedarfssituation anpassbar.

In Ausgestaltung des Aktors ist das Fixierungsmittel ein Toleranzring, welcher an seinem Außenumfang Wellen aufweist, die im verbauten Zustand zwischen Ausrichtungselement und Gegenelement komprimiert sind, insbesondere anteilig komprimiert. Die komprimierbaren Wellen geben dem Fixierungselement die erforderliche breits beschriebene Nachgiebigkeit und ermöglichen die Kratfeinstellung durch Auslegung der Wellen über deren Dimensionierung.

Vorteilhafterweise ist die Dimensionierung der Wellen anhand einer Länge einzelner Wellen und/oder anhand einer Anzahl an Wellen und/oder anhand eines Materials der Wellen einstellbar.

In Ausgestaltung des Aktors ist das Ausrichtungselement an einem Gehäuse der Antriebseinheit ausgebildet oder an einem Gehäuse angebracht, insbesondere mittels eines Motorflansches angebracht.

Durch Vorsehen eines derartigen Fixierungselements zwischen Ausrichtungselement und Gegenelement eines Aktors kann eine ungewünschte Bewegung insbesondere in axialer Richtung der Getriebeachse von Antriebseinheit und Getriebeeinheit zueinander wirksam reduziert oder unterbunden werden. Ferner erfolgt durch die Verwendung eines Federelements zwischen Ausrichtungselement und Gegenelement eine akkustische Dämpfung bei Belastung des Getriebes. In Summe wird die Geräuschsituation bei Betrieb des Aktors dadurch verbessert.
Durch Vermeiden einer Bewegung von Antriebseinheit zur Getriebeeinheit kann auch eine Veränderung einer Positionierung von an der Kraftübertragung beteiligter Zahnräder verhindert werden, was die Lebensdauer der Getriebes erhöht.
Figur 1 zeigt einen Teil eines Aktors mit einer Getriebeeinheit und einer Antriebseinheit.
Figur 2 zeigt eine Antriebseinheit des Aktors.
Figur 3 zeigt eine Verbindungsstelle zwischen einer Antriebseinheit und einer Getriebeeinheit.
Figur 4 zeigt die Antriebseinheit des Aktors mit einem Motorflansch.
Figur 5 zeigt die Verbindungsstelle der Antriebseinheit mit der Getriebeeinheit des Aktors mit einer Fixierung.
Figuren 6 bis 9 zeigen Details der Fixierung für die Verbindung zwischen Antriebseinheit und Getriebeeinheit.
Figuren 10 bis 12 zeigen Anordnungen der Fixierung für unterschiedliche Zuordnungen eines Pins und einer Aufnahme für den Pin zu Getriebeeinheit sowie zur Antriebseinheit respektive.

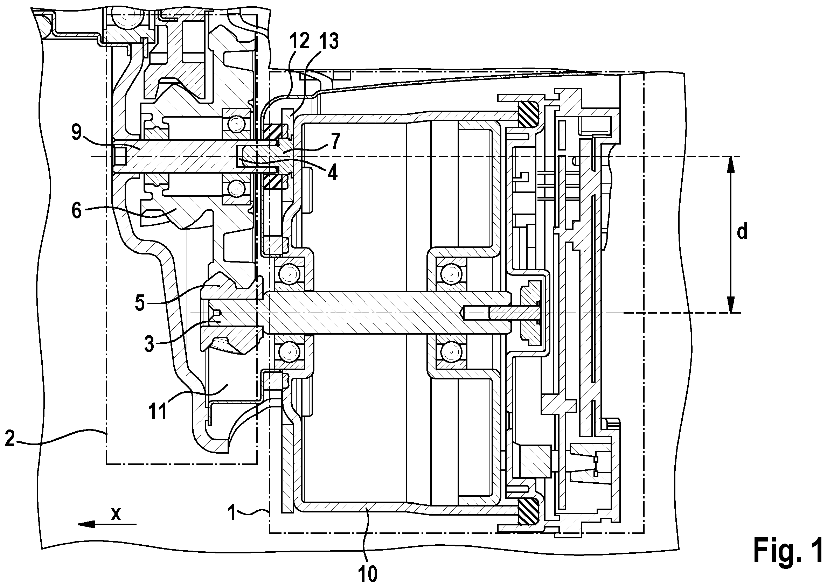

In Figur 1 ist ein Ausschnitt eines Aktors gezeigt, der zumindest eine Antriebseinheit 1 sowie eine Getriebeeinheit 2 umfasst. Ein solcher Aktor kann beispielsweise ein Bremskraftverstärker sein, der hydraulischen Bremsdruck in einem hydraulischen Bremssystem erzeugt, indem er motorisch angetrieben Druckkolben verschiebt und dabei entweder selbsttätig, also fahrerunabhängig, oder auch in Form einer Kraft-Unterstützung eines Fahrers beim Druckaufbau eine Bremswirkung in einem hydraulischen Bremssystem erzeugt.

Die Antriebseinheit 1 kann ein Elektromotor 1 sein, der eine Antriebsachse 3 aufweist. Die Antriebsachse 3 ist drehbar an einem Motorgehäuse 10 gelagert und steht in mechanischer Verbindung mit einem Motorritzel 5. Das Motorritzel 5 ist an einem Ende der Antriebsachse 3 angebracht oder an dieser ausgebildet, insbesondere einteilig ausgebildet.

Die Getriebeeinheit 2 weist ein anzutreibendes Getriebezahnrad 6 auf. Das Getriebezahnrad 6 ist auf einer Getriebeachse 9 gelagert. Die Lagerung des Getriebezahnrads 6 auf der Getriebeachse 9 ist dergestalt, dass das Getriebezahnrad 6 um die Getriebeachse 9 drehbar ist. Die Getriebeeinheit 2 ist in der Lage eine Bewegung in einem Aktor hervorzurufen, beispielsweise in einem Bremskraftverstärker. Über das Getriebezahnrad 6 kann beispielsweise ein Spindeltrieb eines Bremskraftverstärkers als Aktor angetrieben werden.

Das Getriebezahnrad 6 der Getriebeeinheit 2 wird durch die Antriebseinheit 1 angetrieben. Ein Motor der Antriebseinheit 1 versetzt dazu über die Antriebsachse 3 das Motorritzel 5 in Rotation. Das Motorritzel 5 steht in Eingriff mit dem Getriebezahnrad 6. Der Eingriff von Motorritzel 5 und Getriebezahnrad 6 kann über entsprechende Verzahnungen von Motorritzel 5 und Getriebezahnrad 6 erfolgen.

Für eine mechanische Kontaktierung des Motorritzels 5 mit dem Getriebezahnrad 6 wird das Motorritzel 5 in einen Innenraum 11 der Getriebeeinheit 2 eingebracht. Dies kann dadurch erfolgen, dass das Motorritzel 5 durch eine Öffnung eines Gehäuseteils 12 der Getriebeeinheit 2 in den Innenraum 11 eingeführt wird. Dabei kann das Motorritzel 5 bereits auf der Antriebsachse 3 montiert, ausgeformt oder mit dieser verbunden sein.

Ein Einbringen des Motorritzels 5 in den Innenraum 11 der Getriebeeinheit kann erfolgen, indem die Antriebseinheit 1 mit der Getriebeeinheit 2 verbaut wird. Dazu kann die Antriebseinheit 1, mit dem Motorritzel 5 auf die Getriebeeinheit 2 zubewegt werden, beispielsweise in Montagerichtung x. Ebenso kann alternativ auch die Getriebeeinheit 2 auf die Antriebseinheit 1 zubewegt werden.

Bei einem Zusammenspiel des Motorritzels 5 mit dem Getriebezahnrad 6 sollten Motorritzel 5 und Getriebezahnrad 6 exakt zueinander angeordnet sein, so dass ein mechanischer Eingriff zwischen antreibendem Bauteil (Motorritzel 5) und angetriebenem Bauteil (Getriebezahnrad 6) ausreichend genau erfolgt. Ferner werden bei einem Zusammenspiel des Motorritzels 5 und des Getriebezahnrads 6 auch Kräfte übertragen, welche dazu führen können, dass von einer vorigen exakten Anordnung der Bauteile durch deren Belastung abgewichen wird.

Die Antriebseinheit 1 weist ein Ausrichtungselement 7 auf, welches die exakte Anordnung des Motorritzels 5 zum Getriebezahnrad 6 gewährleistet. Ebenso weist die Getriebeeinheit 2 ein Gegenelement 4 auf, welches ebenfalls die exakte Anordnung des Motorritzels zum Getriebezahnrad 6 gewährleistet.

Ein Ausrichtungselement 7 ist beispielsweise als ein Pin 7 oder auch ein Zapfen 7 ausgebildet. Ein solcher Pin 7 oder Zapfen 7 kann an dem Gehäuse 10 der Antriebseinheit 1 ausgebildet sein. Unter ausgebildet kann zum einen verstanden werden, dass das Ausrichtungselement 7 einteilig mit dem Gehäuse 10 ist. Alternativ kann das Ausrichtungselement 7 am Gehäuse 10 ausgebildet sein, indem es daran befestigt ist, beispielsweise geklebt, geschweißt oder geschraubt. Andere Befestigungsarten sind denkbar. Es ist auch möglich einen Pin 7 an der Antriebseinheit 1 über einen Motorflansch 13 zu befestigen, an dem der Pin 7 fixiert ist und der der Verbindung von Antriebseinheit 1 und Getriebeeinheit 2 dient.

Ebenso ist es möglich, dass das Ausrichtungselement 7 als eine Vertiefung 7 oder eine Mulde 7, oder ein Loch 7 im oder am Gehäuse 10 der Antriebseinheit 1 ausgebildet ist. Auch in dieser Ausführung des Ausrichtungselements 7 kann das Ausrichtungselement 7 angebracht am Gehäuse sein, oder auch im Gehäuse ausgeformt. Als Befestigungstechniken kommen ebenfalls bekannte Befestigungsarten in Frage, insbesondere die bei der Ausführung als Pin oder Zapfen genannten Befestigungstechniken.

Das Gegenelement 4 der Getriebeeinheit 2 ist komplementär zum Ausrichtungselement 7 ausgebildet. Unter komplementär ist zu verstehen, dass Gegenelement 4 und Ausrichtungselement 7 in ihren geometrischen Bemaßungen so vorgesehen sind, dass sie zueinander in Eingriff gelangen können. Für den Fall eines Pins als Ausrichtungselement 7 ist beispielsweise das korrespondierende Gegenelement 4 als Mulde oder Loch vorgesehen. Die Mulde 4 beziehungsweise das Loch 4 sind in Durchmesser und Tiefe so ausgelegt, dass der Pin 7 zumindest anteilig in die Mulde 4 aufgenommen werden kann. Ferner kann die Aufnahme des Pins 7 in der Mulde 4 kraftschlüssig erfolgen. Der Pin 7 kann nach Einbringen - gegebenenfalls unter Verwendung eines Einpressdrucks - somit in der Mulde 4 gehalten werden. Durch einen Kraftschluss ist auch eine Übertragung von Kräften von einem Bauteil zum anderen möglich.

Für den alternativen Fall einer Ausführungsform, bei der an der Antriebseinheit 1 eine Mulde als Ausrichtungselement 7 vorgesehen ist, ist das komplementäre Gegenelement 4 als Pin 4 vorgesehen.

Wie bereits beschrieben weist die Getriebeeinheit 2 eine Getriebeachse 9 auf, die am Gehäuse 12 der Getriebeeinheit 2 gelagert ist. Ein Ende der Getriebeachse 9 ragt dabei durch eine Öffnung im Getriebegehäuse 12 in Richtung der Antriebseinheit 1. An dem Ende der Getriebeachse 9, welches durch die Öffnung des Getriebegehäuses 12 ragt, ist das Gegenelement 4 ausgebildet.

Das Gegenelement 4 der Getriebeeinheit 2 ist an der Getriebeeinheit 2 an einer Stelle ausgebildet, welche bei der Montage von Getriebeeinheit 2 und Antriebseinheit 1 dem Ausrichtungselement 7 gegenüberliegend ist. Anders gesagt, passen die Positionierungen des Ausrichtungselements 7 an der Antriebseinheit 1 sowie des Gegenelements 4 an der Getriebeeinheit 2 zueinander, so dass bei einer entsprechend orientierten Montage Gegenelement 4 und Ausrichtungselement 7 in Eingriff gelangen können.

Wie oben geschildert gelangt das Motorritzel 5 in den Innenraum 11 der Getriebeeinheit 2 durch eine Öffnung im Getriebegehäuse 2. Durch die Öffnung im Getriebegehäuse 12 für das Motorritzel 5 und durch die jeweilige Positionierung des Ausrichtungselements 7 an der Antriebseinheit 1 sowie des Gegenelements 4 an der Getriebeeinheit 2 ist eine Ausrichtung definiert, in der die Antriebseinheit 1 mit der Getriebeeinheit 2 zu montieren ist. Nur in einer dementsprechenden Ausrichtung von Getriebeeinheit 2 zur Antriebseinheit 1 kann eine passgenaue Montage der Teile erfolgen.

Zwischen Antriebseinheit 1 und Getriebeeinheit 2 ist ein Motorflansch 13 vorgesehen, welcher eine Anbringung und/oder Verbindung der beiden Einheiten erleichtert. Das erwähnte Ausrichtungselement 7 ist in der gezeigten Ausführung am Motorflansch 13 befestigt. Alternativ kann das Ausrichtungselement auch einteilig mit dem Motorflansch 13 ausgebildet sein, beispielsweise ausgeformt.

Ebenso ist es möglich, dass das Ausrichtungselement 7 in Form eine Vertiefung oder Mulde indirekt an der Antriebseinheit 1 ausgebildet ist, beispielsweise über den Motorflansch 13. Eine indirekte Ausbildung an der Antriebseinheit 1 über den Motorflansch 13 kann in Form einer Bohrung 7, eines Lochs 7 oder einer Mulde 7 im Motorflansch 13 vorliegen, wobei dieser an der Antriebseinheit 1 befestigt ist.

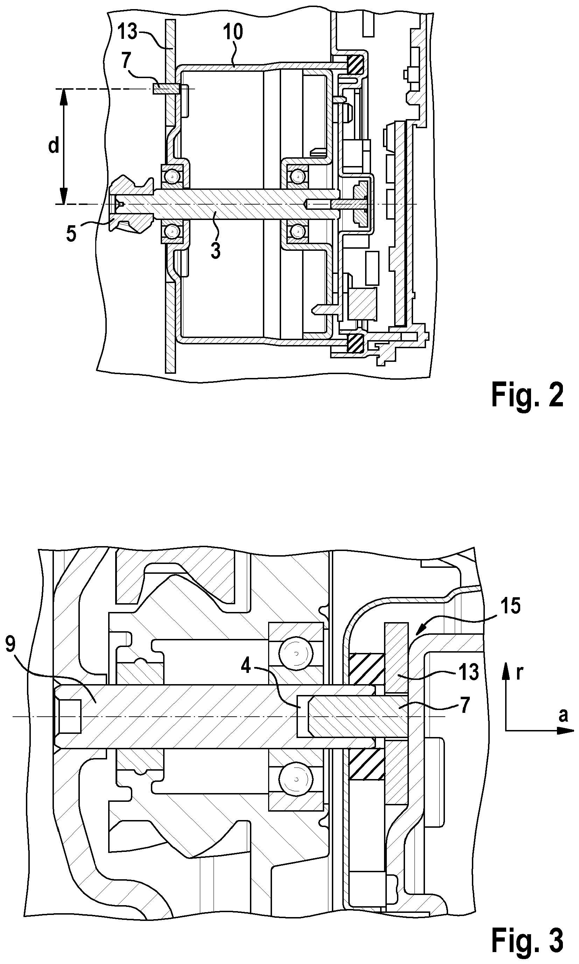

Figur 2 zeigt die Antriebseinheit 1 im unverbauten Zustand, also separat von der Getriebeeinheit 2. Hervorgehoben ist in Figur 2 nochmal die Antriebsachse 3 das Motorritzel 5, der Abstand d zwischen Pin 7 und der Antriebsachse 3. Dieser Abstand d definiert auch den parallel-Versatz, unter dem der Pin 7 zur Antriebsachse 3 angeordnet ist. Im montierten Zustand der Antriebseinheit 1 an der Getriebeeinheit 2 entspricht dieser Abstand auch dem relativen parallel-Versatz der Antriebsachse 3 zur Getriebeachse 9. Die in Figur 2 gezeigte Ausführungsform umfasst das Ausrichtungselement 7 als Pin. Die (nicht gezeigte) zugehörige Getriebeeinheit muss dann als Gegenelement 4 eine Mulde 4 in der Getriebeachse 9 aufweisen. Anstatt des in Figur 2 gezeigten Pins 7 kann an dieser Stelle eine Mulde oder ein Loch 4 vorgesehen sein. Das Gegenelement 4 der zugehörigen Getriebeeinheit 2 muss dann einen entsprechenden Pin 7 aufweisen.

Im hier gezeigten Beispiel einer Antriebseinheit 1 ist das Ausrichtungselement 7 nicht am Gehäuse 10 der Antriebseinheit ausgeformt, sondern an diesem indirekt befestigt. Die Befestigung des Pins 7 erfolgt über den Motorflansch 13, der am Gehäuse 10 der Antriebseinheit angebracht ist. Somit ist der Pin 7 an der Antriebseinheit 1 ausgebildet indem er indirekt befestigt ist. Der Pin 7 kann im Motorflansch 13 eingepresst sein. Ferner kann der Pin 7 eingepresst und gecrimpt sein. Die Verbindung zwischen Pin 7 und Motorflansch 13 ist eine starre Verbindung. Die Verbindung zwischen Pin 7 und Motorflansch 13 ist mediendicht, also dicht gegenüber Luft und/oder Wasser ausgebildet.

Figur 3 zeigt den Eingriff zwischen einem Ausrichtungselement 7 in Form eines Pins 7 mit einem Gegenelement 4 in Form einer Mulde 4. Der Pin 7 ist in dieser Ausführung im Motorflansch 13 befestigt, insbesondere dort eingepresst und vercrimpt. Eine derartige Anbindung der Antriebseinheit 1 an die Getriebeeinheit 2 mittels des Pins 7 in der Mulde 4 der Getriebeachse 9 bietet bereits eine gute Stabilität bei einem Betrieb des Aktors. Insbesondere in radialer Richtung r (eingezeichnet in Figur 3) findet eine gute Abstützung bei Belastung des Getriebes im Betrieb statt.

Zur Verbesserung der Stabilität bei Belastung des Getriebes kann auch die Verbindung in axialer Richtung a am Pin 7 verbessert werden. Dies ist Thema der folgenden Abschnitte.

Bei den folgenden Überlegungen wird zur einfacheren Erklärung davon ausgegangen, dass der Pin 7 an der Antriebseinheit 1 vorgesehen ist, wobei eine Mulde oder ein Loch 4 in der Getriebeachse vorgesehen ist. Es ist jedoch klar, und wird auch noch an Beispielen erklärt werden, dass eine umgekehrte Konstellation ebenfalls möglich ist.

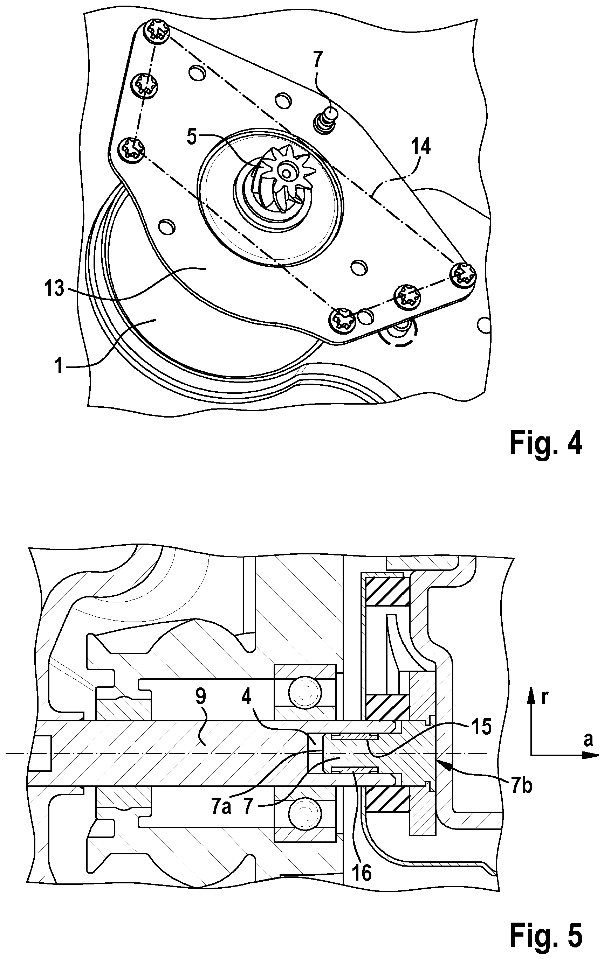

Figur 4 zeigt eine andere Ansicht der Antriebseinrichtung 1. Im Vordergrund ist das Motorritzel 5 zu sehen, welches im verbauten Zustand das Getriebezahnrad 6 antreiben soll. Auf der Seite der Antriebseinheit 1, welche das Motorritzel 5 aufweist, ist ein Motorflansch 13 angebracht, der mit der Antriebseinheit 1 verbunden ist. An dem Motorflansch 13 ist wie oben beschrieben der Pin 7 als Ausrichtungselement 7 angebracht. Der Pin 7 soll in das Gegenelement 4, also in die Mulde 4 der Getriebeachse 9 der Getriebeeinheit 2 eingebracht werden.

Der Motorflansch 13 hat eine trapezähnliche Form. Auf Grund der geometrischen Auslegung des Motroflanschs 13 als Trapez hat dieser eine lange Grundseite 14.

Bei Belastung des Getriebes 2 durch Antreiben des Getriebezahnrads 6 durch das Motorritzel 5 entstehen Radialkräfte am Motorritzel 5 sowie die bereits erwähnten radialen und axialen Kräfte am Pin 7.
Auf Grund der geringen Biegesteifigkeit des Motorflansches, hervorgerufen durch die Lange Grundseite 14, können die im Betrieb vorherrschenden Kräfte zu einer Schrägstellung der Antriebseinheit 1, also des Motors führen, und somit der Antriebsachse 3 mitsamt des Motorritzels 5. Die mechanische Verbindung und Kraftübertragung zwischen Motorritzel 5 und Getriebezahnrad 6 kann dadurch verschlechtert sein, und es können Geräuschentwicklungen auftreten, durch nicht mehr optimales Positionieren des Zahnrads / des Motorritzels zueinander.

Diese Beweglichkeit des Motorflansches 13 wird durch eine Ausführungsform verringert, wie sie im Folgenden anhand von Figur 5 erklärt wird.

Auf den Pin 7 ist ein Toleranzring 16 aufgebracht, der den Pin 7 entlang des Umfangs des Pins 7 zumindest anteilig umgreift. Dieser Toleranzring 16 wird bei der Montage von Antriebseinheit 1 und Getriebeeinheit 2 zwischen einer außenliegenden Umfangoberfläche des Pins 7 und einer innenliegenden Oberfläche des Gegenelements 4, beispielsweise der Mulde 4, verpresst.

Der Pin 7 kann ferner eine Ringnut 15 aufweisen, welche an einem Zwischenabschnitt des Pins 7 ausgebildet ist. Der Zwischenabschnitt befindet sich zwischen dem Ende 7a des Pins 7, welches dem Gegenelement 4 zugewandt ist und der Verbindung 7b des Pins 7 zum Motorflansch 13 im Fußbereich des Pins 7.

Die Ringnut 15 wird durch eine Verjüngung des Pins 7 im Zwischenbereich gebildet. Die Ringnut 15 ist von der Dimensionierung so auszulegen, dass sie den Toleranzring 16 aufnehmen kann. Dabei kann es ausreichen, dass eine Dimension der Ringnut 15 in axialer Richtung a an den Toleranzring 16 angepasst ist. In radialer Richtung r kann der Toleranzring 16 aus der Ringnut 15 herausragen.

Der Toleranzring 16 kann in die Ringnut 15 eingeklinkt werden. Im verbauten Zustand zwischen Außenumfang des Pins 7 und der Innenwand des Gegenelements 4 kann der Toleranzring 16 Axialkräfte , also Kräfte in Richtung a übertragen insbesondere sind dies Zug-oder Druckkräfte. Radialkräfte, also Kräfte in Richtung r, werden indirekt über den Pin 7 und oder direkt über den Toleranzring 16 auf die Getriebeachse 9 übertragen. Durch Ausbilden der Axialkräfte in Richtung a kann einem Verbiegen des Motorflansches 13 entgegengewirkt werden, da die Getriebeachse 9 den in axialer Richtung weichen und somit beweglichen Motorflansch 13 abstützt. Da der Motorflansch 13 auf diese Weise an der Getriebeachse 9 abgestützt ist, kann so auch einem Verkippen der Antriebseinheit 1 entgegengewirkt werden, insbesondere dieses verhindert werden.

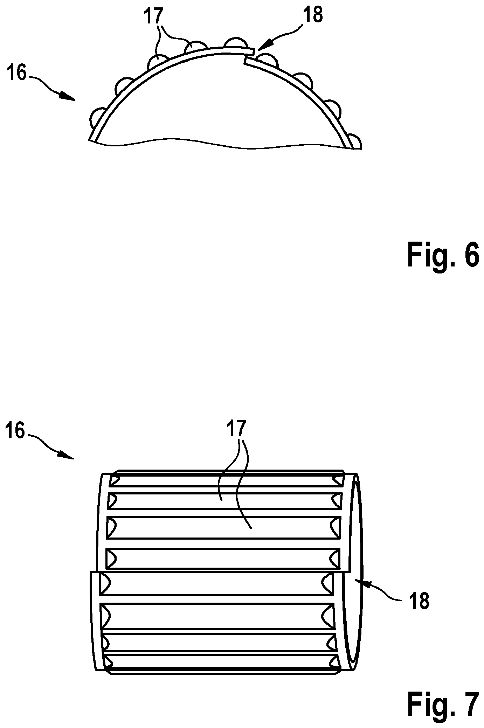

Figur 6 zeigt eine Ansicht einer oberen Hälfte eines Toleranzrings 16 im unverbauten Zustand. Der Toleranzring 16 ist mit einem Schlitz 18 versehen, sodass dieser in seiner Weite verändert werden kann. Dies ermöglicht eine einfache Montage, beispielsweise durch Aufschieben des Toleranzrings 16 und ein Platzieren in der Ringnut 15 des Pins 7. Der Toleranz Ring 16 ist dabei aus einem biegbaren Material gefertigt, insbesondere einem elastischen Material. Ein mögliches Material ist Blech.

Der Toleranzring 16 weist ferner Wellen 17 auf, welche entlang des Umfangs des Toleranzrings 16 angeordnet sind. Diese Wellen 17 bestehen ebenfalls aus einem verformbaren Material, welches unter Krafteinwirkung nachgeben kann. So kann beispielsweise eine Kraft in Richtung der Mitte des Toleranzrings 16 dazu führen, dass die Welle 17 in Richtung auf die Mitte des Toleranzring 16 zu gestaucht oder komprimiert wird. Die Wellen 17 können funktional auch als Federn 17 verstanden werden, die unter Krafteinwirkung beim Verbauen nachgeben können, jedoch unter ausüben einer Gegenkraft/einer Rückstellkraft in radialer Richtung des Toleranzrings 16. Auch der Toleranzring 16 kann insgesamt als Federelement 16 verstanden werden.

Figur 7 zeigt den Toleranzring 16 in einer Seitenansicht. Hier sind die Wellen 17, angeordnet entlang der axialen Ausdehnung des Toleranzrings 16 zu erkennen.

Im unverbauten Zustand kann ein leichter axialer Versatz im Bereich des Schlitzes 18 vorliegen.

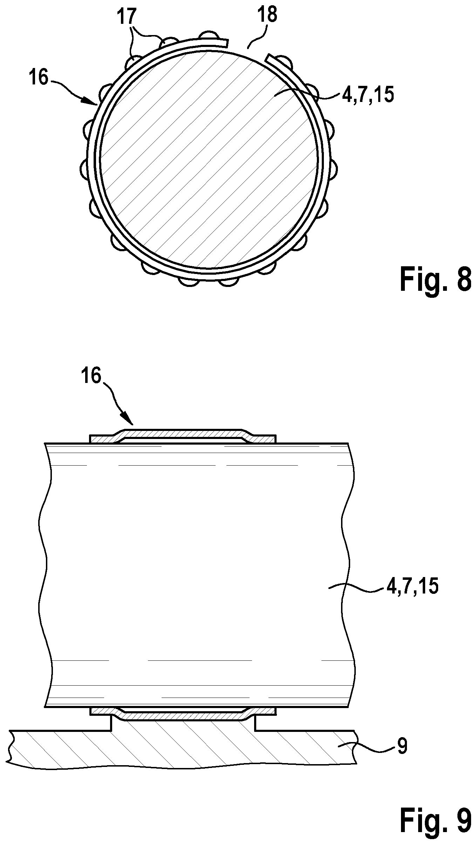

Figur 8 zeigt eine Ansicht entlang der axialen Auslegung a des Pins 7 mit verbautem Toleranzring 16. Die Wellen 17 entlang des Umfangs des Toleranzring 16 sind auch in Figur 8 zu sehen. Der angesprochene Schlitz 18 ist als Öffnung entlang des Umfangs des Pins 7 ebenfalls zu erkennen. In dieser Sicht ist die Nut 15 nicht zu erkennen, jedoch über das Bezugszeichen angedeutet. Ferner kann der Toleranzring 16 auch auf einem Pin angebracht sein, der als Gegenelement 4 an der Getriebeachse 9 ausgebildet ist, was weiter unten nochmals erklärt ist. Für diesen Fall ist noch das Bezugszeichen 4 aufgenommen.

Figur 9 zeigt eine Seitenansicht des Pins 7 als Schnittdarstellung. Hier ist zu sehen wie der Toleranzring 16 auf beiden Seiten des Pins 7 in radialer Richtung des Pins 7 vorhanden ist. Ebenfalls ist eine Wand der Getriebeachse 9 angedeutet. Die zweite Wand wurde in Figur 9 nicht eingezeichnet. Zwischen der Wand der Getriebeachse 9, die das Gegenelement 4 bildet, und dem Pin 7 wird im verbauten Zustand der Toleranzring 16 verpresst. Beim Verpressen des Toleranzrings 16 wird insbesondere eine Kraft auf die Wellen 17 ausgeübt, welche in radialer Richtung r des Toleranzrings 16 nachgeben und so den Pin 7 reibschlüssig im Gegenelement 4 fixieren.
In dieser Sicht ist die Nut 15 nicht dargestellt, jedoch über das Bezugszeichen angedeutet. Ferner kann der Toleranzring 16 auch auf einem Pin angebracht sein, der als Gegenelement 4 an der Getriebeachse 9 ausgebildet ist, was weiter unten nochmals erklärt ist. Für diesen Fall ist noch das Bezugszeichen 4 aufgenommen.

Aufgrund der Tatsache, dass die Wellen 17 verformbar sind, ist es einfach möglich beim Montieren der Antriebseinheit 1 mit der Getriebeeinheit 2, den Pin 7 im Gegenelement 4 zu verbauen. Ebenso ist es möglich, die Bauteile wieder einfach zu demontieren. Bei der vorliegenden Verbindung von Pin 7 und Gegenelement 4 handelt es sich somit um eine lösbare Verbindung. Die Montage kann in vorteilhafter Weise blind erfolgen, also ohne weitere Handgriffe beim Verbauen um den Pin 7 in Gegenelement 4 zu fixieren. Ein Einpressen des Pins 7 in das Gegenelement 4 der Getriebeachse 9 reicht aus.

Der Toleranzring 16 kann so ausgelegt werden, dass eine Dimensionierung der Wellen eine für den Anwendungsfall angebracht Spannkraft ergibt. Eine Dimensionierung der Wellen 17 umfasst dabei die Anzahl der Wellen 17, die Nachgiebigkeit/die Elastizität der Wellen 17 und/oder eine Länge der Wellen. Die Auslegung des Toleranzrings legt eine Fixierungsstärke fest, die sowohl Montagekräfte, Fixierungskräfte als auch Demontagekräfte einstellt.

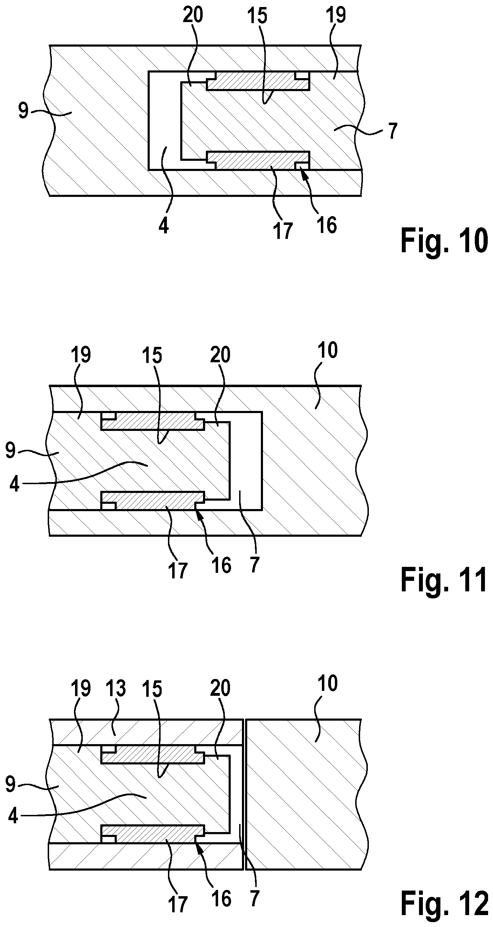

Figur 10 offenbart ein Detail des Pins 7 mit der Nut 15. Die Nut 15 wird durch zwei Nutschultern 19 und 20 seitlich begrenzt. Die Nutschultern 19,20 haben unterschiedliche Ausdehnungen in radialer Richtung in Bezug auf die Achse des Pins 7. So ist die Nutschulter 19, die der Antriebseinheit 1 zugewandt ist, höher als die Nutschulter 20, welche der Getriebeeinheit 2 zugewandt ist, genauer gesagt der Getriebeachse 9. Eine Höhe der Nutschultern 19, 20 kann ausgehend von einem Nutgrund oder Nutboden verstanden werden, der von den Nutschultern 19 und 20 rechts und links begrenzt ist. Der Nutboden oder auch Nutgrund ist nicht mit versehen.

Bezeichnet man das Ausrichtungselement 7 und das Gegenelement 4 als Verbindungselemente 4,7, von denen jeweils eines als Pin vorliegen kann, so kann man allgemein sagen, dass die niedrigere Nutschulter 20 von derjenigen Einheit abgewandt ist, deren Verbindungselement 4,7 als Pin 4,7 ausgebildet ist. Anders ausgedrückt kann man auch sagen, dass immer auf derjenigen Seite, an der der Pin als Verbindungselement 4,7 angebunden ist, die Nutschulter 19 mit der größeren Höhe vorgesehen ist.

Figur 11 zeigt eine Getriebeachse mit einem Gegenelement 4 in der Form eines Pins, der an der Getriebeachse 9 ausgebildet ist. Dementsprechend ist eine Mulde 7 als Ausrichtungselement 7 am Gehäuse 10 der Antriebseinheit 1 ausgebildet. Der Toleranzring 16 sitzt in diesem Beispiel auf dem Gegenelement 4 in Form eines Pins der Getriebeachse 9. Die Ringnut 15 ist in diesem Fall an dem Pin als Gegenelement 4 ausgebildet.

Figur 12 zeigt wie Figur 11 auch eine Getriebeachse 9 mit einem Gegenelement 4 als Pin. In dieser Ausführungsform ist die Mulde 7 als Ausrichtungselement 7 am Motorflansch 13 ausgebildet, der an der Antriebseinheit 1 angebracht ist. Die Mulde 7 kann als Loch oder als Senke mit Boden im Motorflansch 13 ausgebildet sein. Der Toleranzring 16 sitzt in diesem Beispiel auf dem Gegenelement 4 in Form eines Pins der Getriebeachse 9 in der Ringnut 15.

Nicht gezeigt, aber unter Anbetracht der obigen Erklärungen klar verständlich ist eine Variante, in der das Ausrichtungselement 7 in Form eines Pins 7 ausgestaltet ist, das direkt am Gehäuse 10 der Antriebseinheit 1 befestigt ist, oder sogar an diesem ausgeformt ist.

Ebenfalls nicht gezeigt, aber verständlich kann der Pin als Gegenelement 4 auch an der Getriebeachse 9 angebracht sein, oder Teil der Getriebeachse 9 sein, wobei der Pin als Gegenelement 4 nicht in eine Mulde 7 als Ausrichtungselement 7 im Flansch eingreift, sondern in das Gehäuse 10 der Antriebseinheit 1. Dabei kann der Pin 4 als Gegenelement 4 durch ein Loch im Motorflansch 13 hindurch ragen und so zum Gehäuse 10 gelangen.

## Patentansprüche

1. Aktor mit einer Antriebseinheit (1) und einer Getriebeeinheit (2),
wobei die Antriebseinheit (1) an der Getriebeeinheit - in axialer Richtung einer Getriebeachse (9) der Getriebeeinheit (2) - fixiert ist,
**dadurch gekennzeichnet, dass**
die axiale Fixierung mittels eines Fixierungselements (16) erfolgt, welches zwischen einem Ausrichtungselement (7) der Antriebseinheit (1) und einem Gegenelement (4) der Getriebeeinheit (2) eingebracht ist.

2. Aktor nach Anspruch 1, wobei das Gegenelement (4) Teil der Getriebeachse (9) der Getriebeeinheit (2) ist.

3. Aktor nach Anspruch 2, wobei das Ausrichtungselement (7) und das Gegenelement (4) komplementär zueinander sind.

4. Aktor nach Anspruch 3, **dadurch gekennzeichnet, dass** das Ausrichtungselement (7) und das Gegenelement (4) als Verbindungsbauteile (7,4) derart komplementär sind,
- dass eines der beiden Verbindungsbauteile (7,4) steckerartig und das jeweils andere der beiden Verbindungsbauteile (7,4) buchsenartig vorgesehen ist.

5. Aktor nach Anspruch 4, wobei das Fixierungselement (16) am jeweils steckerartigen Verbindungsbauteil (4,7) angebracht ist.

6. Aktor nach Anspruch 5, wobei das steckerartige Verbindungsbauteil (4,7) einen Zwischenbereich (15) in Form einer Ringnut (15) aufweist, wobei das Fixierungsmittel (16) in die Ringnut (15) aufgenommen ist.

7. Aktor nach Anspruch 6, **dadurch gekennzeichnet, dass** die Ringnut (15) seitliche Nutschultern (19,20) aufweist, die unterschiedliche Ausdehnung ausgehend von einem Nutboden haben.

8. Aktor nach Anspruch 7, **dadurch gekennzeichnet, dass** die höhere Nutschulter (19,20) an derjenigen Seite des Nutbodens vorgesehen ist, an der das steckerartige Verbindungsbauteil (4,7) an der Getriebeeinheit (2) oder an der Antriebseinheit (1) angebunden ist.

9. Aktor nach einem der vorhergehenden Ansprüche, **dadurch gekennzeichnet, dass** das Fixierungsmittel (16) ein Federelement (16), insbesondere ein Toleranzring (16) ist.

10. Aktor nach Anspruch 9, **dadurch gekennzeichnet, dass** bei einer axialen Fixierung mittels des Fixierungsmittels (16) die Fixierung lösbar ist.

11. Aktor nach Anspruch 9 oder 10, **dadurch gekennzeichnet, dass** die axiale Fixierungsstärke der axialen Fixierung von der Auslegung des Fixierungsmittels (16) abhängt.

12. Aktor nach Anspruch 11, **dadurch gekennzeichnet, dass** das Fixierungsmittel ein Toleranzring (16) ist, welcher an seinem Außenumfang Wellen (17) aufweist, die im verbauten Zustand zwischen Ausrichtungselement (7) und Gegenelement (4) komprimiert sind, insbesondere anteilig komprimiert.

13. Aktor nach Anspruch 12, **dadurch gekennzeichnet, dass** die Fixierungsstärke anhand der Auslegung des Toleranzrings (16) über die Dimensionierung der Wellen (17) am Toleranzring (16) einstellbar ist, wobei die Dimensionierung eine Länge einzelner Wellen (17) oder eine Anzahl an Wellen (17) umfasst.

14. Aktor nach einem der vorhergehenden Ansprüche, wobei das Ausrichtungselement (7) an einem Gehäuse (10) der Antriebseinheit (1) ausgebildet ist oder an einem Gehäuse (10) angebracht ist, insbesondere mittels eines Motorflansches (13) angebracht ist.

## Claims

1. Actuator having a drive unit (1) and a transmission unit (2),
wherein the drive unit (1) - in the axial direction of a transmission axle (9) of the transmission unit (2) - is fixed to the transmission unit,
**characterized in that**
the axial fixing takes place by means of a fixing element (16) which is incorporated between an alignment element (7) of the drive unit (1) and a counter element (4) of the transmission unit (2).

2. Actuator according to Claim 1, wherein the counter element (4) is part of the transmission axle (9) of the transmission unit (2).

3. Actuator according to Claim 2, wherein the alignment element (7) and the counter element (4) are mutually complementary.

4. Actuator according to Claim 3, **characterized in that** the alignment element (7) and the counter element (4) as connection components (7, 4) are complementary in such a manner
- that one of the two connection components (7, 4) is provided in the manner of a plug and the respective other of the two connection components (7, 4) is provided in the manner of a socket.

5. Actuator according to Claim 4, wherein the fixing element (16) is attached to the respective plug-type connection component (4, 7).

6. Actuator according to Claim 5, wherein the plug-type connection component (4, 7) has an intermediate region (15) in the form of an annular groove (15), wherein the fixing means (16) is received in the annular groove (15).

7. Actuator according to Claim 6, **characterized in that** the annular groove (15) has lateral groove shoulders (19, 20) which, proceeding from a groove base, have dissimilar extents.

8. Actuator according to Claim 7, **characterized in that** the higher groove shoulder (19, 20) is provided on that side of the groove base on which the plug-type connection component (4, 7) is linked to the transmission unit (2) or to the drive unit (1).

9. Actuator according to one of the preceding claims, **characterized in that** the fixing means (16) is a spring element (16), in particular a tolerance ring (16) .

10. Actuator according to Claim 9, **characterized in that** the fixing is releasable in the case of an axial fixing by means of the fixing means (16).

11. Actuator according to Claim 9 or 10, **characterized in that** the axial fixing strength of the axial fixing is a function of the design of the fixing means (16).

12. Actuator according to Claim 11, **characterized in that** the fixing means is a tolerance ring (16) which on the external circumference thereof has corrugations (17) which in the installed state are compressed, in particular proportionally compressed, between the alignment element (7) and the counter element (4).

13. Actuator according to Claim 12, **characterized in that** the fixing strength by virtue of the design of the tolerance ring (16) is adjustable by way of the sizing of the corrugations (17) on the tolerance ring (16), wherein the sizing comprises a length of individual corrugations (17) or a number of corrugations (17).

14. Actuator according to one of the preceding claims, wherein the alignment element (7) is configured on a housing (10) of the drive unit (1) or is attached to a housing (10), in particular is attached by means of a motor flange (13).

## Revendications

1. Actionneur comprenant une unité d'entraînement (1) et une unité de transmission (2), l'unité d'entraînement (1) étant fixée à l'unité de transmission dans la direction axiale d'un axe de transmission (9) de l'unité de transmission (2),
**caractérisé en ce que**
la fixation axiale a lieu au moyen d'un élément de fixation (16) qui est introduit entre un élément d'orientation (7) de l'unité d'entraînement (1) et un élément conjugué (4) de l'unité de transmission (2) .

2. Actionneur selon la revendication 1, dans lequel l'élément conjugué (4) fait partie de l'axe de transmission (9) de l'unité de transmission (2).

3. Actionneur selon la revendication 2, dans lequel l'élément d'orientation (7) et l'élément conjugué (4) sont complémentaires l'un de l'autre.

4. Actionneur selon la revendication 3, **caractérisé en ce que** l'élément d'orientation (7) et l'élément conjugué (4), en tant que composants de connexion (7, 4), sont complémentaires de telle sorte que
- l'un des deux composants de connexion (7, 4) soit prévu sous forme de fiche et que l'autre respectif des deux composants de connexion (7, 4) soit prévu sous forme de douille.

5. Actionneur selon la revendication 4, dans lequel l'élément de fixation (16) est monté sur le composant de connexion de type fiche respectif (4, 7) .

6. Actionneur selon la revendication 5, dans lequel le composant de connexion de type fiche (4, 7) présente une région intermédiaire (15) en forme de rainure annulaire (15), le moyen de fixation (16) étant reçu dans la rainure annulaire (15).

7. Actionneur selon la revendication 6, **caractérisé en ce que** la rainure annulaire (15) présente des épaulements de rainure latéraux (19, 20) qui présentent une étendue différente à partir d'un fond de rainure.

8. Actionneur selon la revendication 7, **caractérisé en ce que** l'épaulement de rainure le plus haut (19, 20) est prévu au niveau du côté du fond de rainure au niveau duquel le composant de connexion de type fiche (4, 7) est raccordé à l'unité de transmission (2) ou à l'unité d'entraînement (1).

9. Actionneur selon l'une quelconque des revendications précédentes, **caractérisé en ce que** le moyen de fixation (16) est un élément de ressort (16), en particulier une bague de tolérance (16).

10. Actionneur selon la revendication 9, **caractérisé en ce que** dans le cas d'une fixation axiale au moyen du moyen de fixation (16), la fixation est amovible.

11. Actionneur selon la revendication 9 ou 10, **caractérisé en ce que** la force de fixation de la fixation axiale dépend de la conception du moyen de fixation (16).

12. Actionneur selon la revendication 11, **caractérisé en ce que** le moyen de fixation est une bague de tolérance (16) qui présente, au niveau de sa périphérie extérieure, des ondulations (17) qui, dans l'état installé, sont comprimées entre l'élément d'orientation (7) et l'élément conjugué (4), en particulier sont comprimées de manière proportionnelle.

13. Actionneur selon la revendication 12, **caractérisé en ce que** la force de fixation peut être ajustée à l'aide de la conception de la bague de tolérance (16) par le biais du dimensionnement des ondulations (17) au niveau de la bague de tolérance (16), le dimensionnement comprenant une longueur des ondulations individuelles (17) ou un nombre d'ondulations (17).

14. Actionneur selon l'une quelconque des revendications précédentes, dans lequel l'élément d'orientation (7) est réalisé au niveau d'un boîtier (10) de l'unité d'entraînement (1) ou est monté sur un boîtier (10), en particulier est monté au moyen d'une bride de moteur (13).
